# EUROPEAN PATENT APPLICATION

(11) **EP 1 479 297 A1**
(43) Date of publication of application: **24.11.2004**
(21) Application number: 03011373.2
(22) Date of filing: 19.05.2003
(51) Int. Cl.: A22C 11/08

(54) **Feeding hopper for stuffing machines for soft pasties and stuffing machine for soft pasties**

(71) Applicant: Antonio Borgo & C. S.A.S., 36016 Thiene (Vicenza) (IT)
(72) Inventor: Antonio Borgo & C. S.A.S., 36016 Thiene (Vicenza) (IT)
(74) Representative: Grünecker, Kinkeldey, Stockmair & Schwanhäusser Anwaltssozietät

(57) **Abstract**

There are described a hopper (2) for feeding stuffing machine with soft pasties and a stuffing machine equipped with such a hopper. Said hopper comprises a main body (2a) having a discharging axis and adapted to be loaded with soft pasties. Within said main body (2a) there are received discharging means (10) comprising a hollow body (14) and advancing means (13) received inside said hollow body (14). Said discharging means are placed inside the main body (2a) in such a way that the advancing direction runs substantially parallel with the discharging axis of the main body.

## Description

The present invention relates to the preparation of food products. In particular, the present invention relates to the preparation of stuffed food products. In more detail, the present invention relates to a feed hopper of the kind used for feeding stuffing machines with soft pasties containing meat or vegetables, such as for example, pasties for mortadelles, bologna sausages or stuffed products in general, but also soft pasties containing vegetables such as soya or the like. Moreover, the present invention to stuffing machines for soft pasties containing meat and/or vegetables, wherein said stuffing machines are equipped with a feeding hopper.

### DESCRIPTION OF THE PRIOR ART

It is known that traditional or common stuffed products such as salami and in particular mortadelles or bologna sausages, are prepared by filling a tubular food casing with a soft past containing meat. The food casing may be a casing originating from animals or a rubber or synthetic casing, for instance, containing collagen. The food casing is filled with a predefined amount of paste and ties or clips are applied at regular intervals to the filled casing so as to realize stuffed products having predefined dimensions. In particular, the stuffing operations are executed by using stuffing machines wherein the paste is properly worked by means of working means adapted to this end. Moreover, the paste worked inside the stuffing machine is emitted through a stuffing of feeding horn or tube so as to fill a tubular food casing which has been previously placed over the feeding tube or fitted onto the feeding tube like a sock.

During the years, with the purpose of meeting and/or accomplishing the exigencies of the consumers, the producers of sausages or stuffed products in general were oriented toward using stuffing machines comprising essentially two different pumps disposed in sequence between a feeding hopper for feeding the stuffing machine with the meat paste and the exiting tube or horn of the stuffing machine. The pump disposed upstream between the hopper and the horn in the advancing direction of the paste is of the kind comprising a screw, for instance an endless or metering screw. The second pump, i.e., the pump placed downstream in the advancing direction of the paste, is adapted to push the soft paste through the exiting tube of the stuffing machine and is usually a positive-displacement pump, for instance, comprising a rotatable body equipped with blades. Moreover, suction means are also provided for the purpose of removing air so as to avoid that air is trapped within the casing and air pockets, voids, wrinkles or creases are formed which could reduce the quality of the stuffed products.

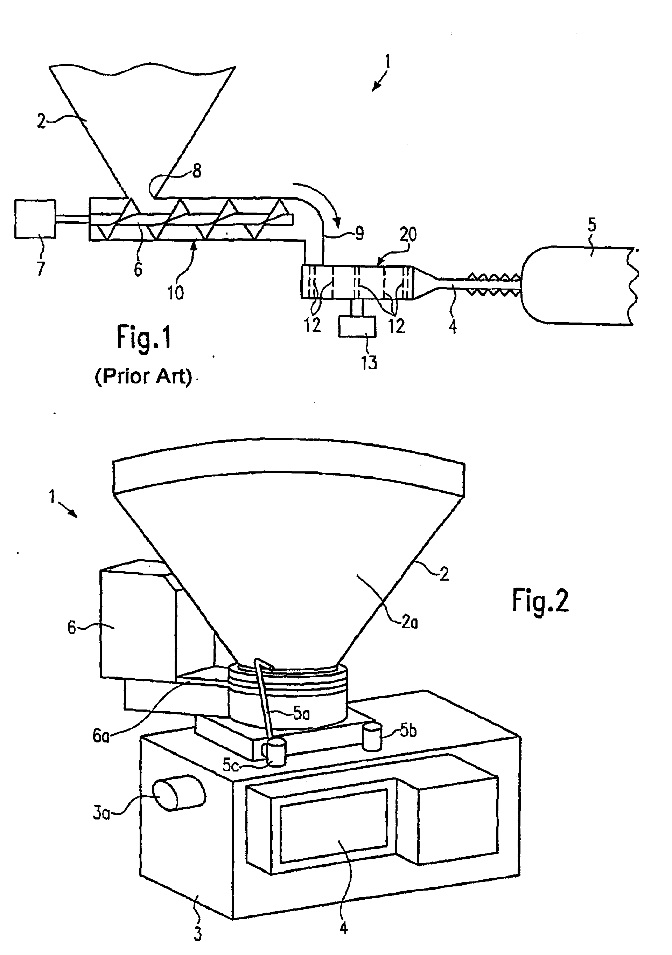

In the following, description will be given with reference to Figure 1 of a stuffing machine known in the art.

In particular, the known stuffing machine depicted schematically in Figure 1 and identified by the reference numeral 1, comprises essentially a feeding hopper 2 adapted to be loaded with a soft paste and an exit tube or horn for emitting the paste. As anticipated above, a tubular food casing 5 is placed over the tube 4 or fitted onto the tube 4 like a sock. Two pumps are disposed between the hopper 2 and the tube 4, namely a first pump 10 and a positive-displacement pump 20. The pump 10 is placed upstream with respect to the positive-displacement pump 20. The pump 10 is equipped with an endless screw 6 which is actuated by a motor 7 and comprises a loading aperture of mouth 8 and an exiting aperture or mouth 9. The loading mouth 8 is placed in proximity to the bottom of the hopper 2 so that the pump 10 is connected to the hopper 2. The outlet or exiting aperture or mouth 9 is connected to the inlet of the positive-displacement pump 20. The pump 20 comprises a rotor equipped with radial blades 12 and is actuated by means of a motor 13.

In the known stuffing machine depicted in Figure 1, the soft paste is loaded into the hopper 2 and pushed by the pump 10 into the positive-displacement pump 20 and advanced by the pump 20 so as to be emitted through the emitting tube 4 so as to fill the tubular casing 5.

The known stuffing machines of the kind depicted in Figure 1 are affected by several disadvantages.

First of all, in view of the reciprocal disposition of the hopper 2 and the pump 10 comprising an endless screw, the pump 10 may not be adequately fed with the soft paste. In fact, due to the fact that the paste may have a certain consistence, it may happen that the paste adheres to or hangs on the wall of the hopper 2. Accordingly, the paste is not collected by the screw 6 when the screw is rotaing so that at least a portion of the paste inside the hopper cannot exit the hopper through the loading mouth or aperture 8 but remains trapped inside the hopper. The intervention of the operator is therefore requested, who must push by hand the paste from the top to the bottom of the hopper through the loading aperture 8 so that the paste can be collected by the endless screw and advanced into the positive-displacement pump 20. However, when this operation is requested, the stuffing operations must be temporarily stopped, so that the working time increases.

Moreover, even the feeding of the positive-displacement pump 20 by means of the pump 10 comprising an endless screw 6 is affected by several disadvantages. In fact, also the pump 20 is not always adequately fed with the paste. This is due in particular to the fact that the pump 10 is disposed or placed in a horizontal position, so that the paste exiting the pump 10 does not go through a linear tube for entering into the positive-displacement pump 20 but is forced to go through a curved tube (see the arrow in Figure 1). When the positive-displacement pump 20 is not adequately fed, the stuffing operations are slowed down, accordingly. Moreover, it is often not possible to remove the air pockets which arise inside the pump 20. Said air pockets are therefore trapped inside the stuffed products, thus causing the problems cited above.

Furthermore, due to the fact that the pump 10 comprising the endless screw is placed in a horizontal position, the suction means (not depicted in Figure 1) provided for removing the air from the pump do not always accomplish this task. On the contrary, air is trapped within the paste, conferring to the fat components of the paste a white like color, particularly disliked by the consumers. Finally, the fact that both pumps, namely the pump comprising the endless screw and the positive-displacement pump are placed inside the stuffing machine, renders the stuffing machine very bulky. The overall dimensions of the stuffing machine therefore does not allow the machine to be used in small rooms or in those situations in which only a small space is at a disposal.

In view of the situation as described above, it would be desirable to provide a machine for the preparation of food products allowing to overcome or at least limit the disadvantages affecting the prior art machines. In particular, it would be desirable to provide a stuffing machine allowing to overcome or at least limit the disadvantages affecting the prior art stuffing machine described above. Finally, it would be desirable to provide a hopper for feeding stuffing machines or the like, allowing to overcome the disadvantages affecting the hoppers of the known stuffing machines.

### SUMMARY OF THE PRESENT INVENTION

In general, the present invention relates to the preparation of food products. In particular, the present invention relates to a machine or device for the preparation of stuffed food products. In more detail, the present invention relates to a feeding hopper of the kind used for feeding stuffing machines with soft pasties containing meat or vegetables, such as pasties for mortadelle, bologna sausages or stuffed products in general, but also soft pasties comprising vegetables such as soya or the like. Moreover, the present invention relates to stuffing machines for soft pasties comprising meat or vegetables, with said stuffing machines being equipped with a feeding hopper. Both the hopper and the stuffing machine according to the present invention allow to produce or prepare stuffed products which are free from voids, air pockets, wrinkles, creases or the like. Moreover, the hopper and the stuffing machine according to the present invention allow to avoid that during the stuffing operations, the fat components of the paste are given a white like color, which is particularly disliked or disregarded by the consumers.

The stuffing machines according to the present invention have reduced overall dimensions and are adapted to be used in small rooms or in those situations in which only a reduced spaced is at disposal.

The hoppers according to the present invention allow to simplify the downloading or emission of the paste. In particular, the downloading operations can be sped up, avoiding moreover that residuals of paste adhere to the wall of the hoppers and remain trapped within the hoppers without entering the pump equipped with the endless screw. On the contrary, the hoppers according to the present invention may be quickly and completely emptied.

To this end, according to a first embodiment, the present invention relates to a hopper as claimed in independent claim 1, namely, a feeding hopper of the kind used for feeding stuffing machines with soft pasties. The hopper comprises a main body with a discharge or unloading axis, with said body being adapted to be loaded with said soft pasties. The hopper comprises discharging means for discharging said soft pasties from said main body, with said discharging means having an advancing direction. The discharging means are placed inside said main body in such a way that the advancing direction runs substantially parallel with the discharging axis and comprise a hollow body with at least one receiving aperture and one emitting aperture for receiving and emitting said soft pasties, respectively. Furthermore, said discharging means comprise advancing means inside the hollow body for advancing the soft pasties from said at least one receiving aperture to said at least one second emitting aperture.

Further preferred embodiments of the hopper according to the present invention are defined in the dependent claims 2 to 8.

According to a further embodiment, the present invention relates to a stuffing machine for soft pasties as claimed in independent claim 9, namely, a stuffing machine comprising a hopper according to one of claims 1 to 8.

Other preferred embodiments of the stuffing machine according to the present invention are defined in the dependent claims 10 to 11.

### BRIEF DESCRIPTION OF THE DRAWINGS

Further advantages, objects and features of both the hopper and the stuffing machine according to the present invention will become more apparent with the following detailed description of some preferred embodiments when taken with reference to the accompanying drawings in which identical or corresponding parts are identified by the same reference numerals. In particular, in the drawings:
Figure 1 represents a schematic view of a prior art stuffing machine;
Figure 1 represents an enlarged view of a preferred embodiment of the stuffing machine according to the present invention;
Figure 3 represents a lateral section view of a preferred embodiment of the stuffing machine according to the present invention;
Figure 4 represents a lateral section view of a preferred embodiment of the hopper according to the present invention;
Figures 5a to 5b represent enlarged views of some component parts of a preferred embodiment of the hopper according to the present invention and depict the reciprocal disposition of said component parts.

### DETAILED DESCRIPTION OF THE PRESENT INVENTION

While the present invention is described with reference to the embodiments as illustrated in the following detailed description as well as in the drawings, it should be understood that the following detailed description as well as the drawings are not intended to limit the present invention to the particular illustrative embodiments disclosed, but rather that the described illustrative embodiments merely exemplify various aspects of the present invention, the scope of which is defined by the appended claims.

In the following, a first illustrative embodiment of the stuffing machine for soft pasties according to the present invention will be described with reference to Figure 2. As depicted in Figure 2, the stuffing machine 1 is equipped with a hopper 2 comprising a main body 2a having a typical troncoconical reversed shape or, in other words, the shape of a funnel. The main body 2a is adapted to be loaded from the top with soft pasties of the kind used for the productions and/or preparation of stuffed food products, such as for example, pork sausages, mortadelle or the like, but also soft pasties comprising vegetables, for instance soft pasties used for the production of stuffed products containing vegetables such as soya, gluten or the like.

The main body 2a is placed on a secondary body 3 from which the paste is emitted through an outlet tube or horn 3a. As it will become apparent from the following description, a tubular food casing is placed over the tube 3a or fitted on the tube 3a like a sock so that the tubular casing is filled with the paste exiting the secondary body through the outlet tube 3a.

The paste loaded into the hopper 2 is discharged or unloaded into the secondary body 3 and emitted through the outlet tube 3a. To this end, the hopper 2 comprises discharging means adapted to this end, which would be described in more detail in the following. Moreover, the hopper 2 is placed in correspondence to an inlet aperture (not depicted in Figure 2) of the secondary body 3.

A panel board 4 is provided on the secondary body 3 for allowing the operator to drive and/or set up the operations.

The hopper 2 is placed on a base 5 in such a way to be firmly connected with said base 5. Obviously, the base 5 comprises a through aperture for allowing the paste to be discharged from the hopper 2 into the secondary body 3. Moreover, the base 5 is connected to the secondary body 3 by means of connecting means 5c and hinges 5b. In this way, by actuating the lever 5a it is possible to alternatively connect and disconnect the connecting means 5c so that the base 5 can be rotated, together with the hopper 2, on the hinges 5b. When the hopper 2 is turned over or rotated on the hinges 5b, it is possible to execute an inspection of the component parts located inside the secondary body 3 and placed under or in proximity to the hopper 2. From the following description it will become apparent that said component parts comprise essentially a rotatable pump comprising blades for emitting or exiting the paste from the secondary body 3.

A third receiving body 6 is firmly fixed to the hopper 2 by means of supporting means 6a adapted to this end. In particular, the receiving or housing body 6 is provided for the purpose of housing or receiving driving and/or actuating means (to be described in the following) for actuating discharging means provided inside the hopper 2 for discharging the paste.

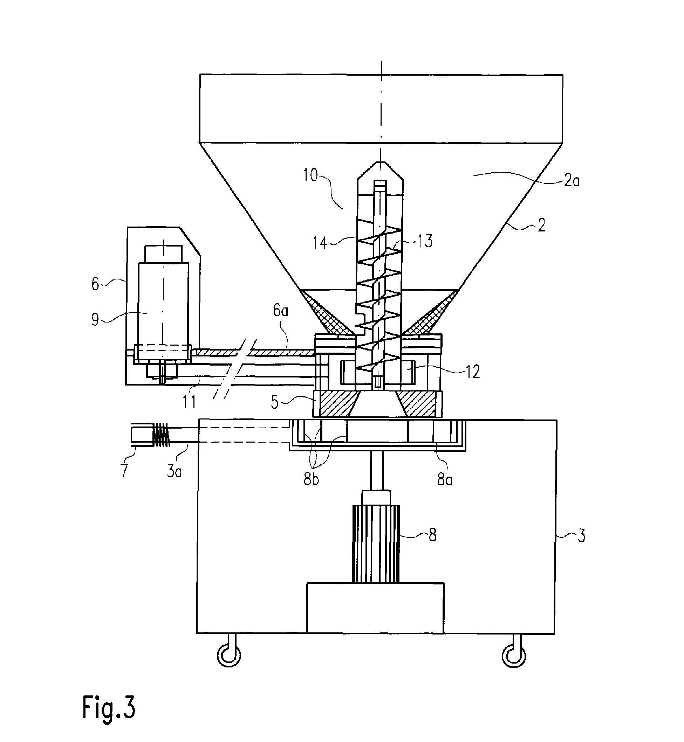

In the following, the main component parts of the hopper and the stuffing machine according to a particular embodiment of the present invention will be described with reference to Figure 3. In Figure 3, those parts already described with reference to Figure 2 are identified by the same reference numerals. Moreover, in Figure 3, those parts depicted in section are represented on the same plane, namely on the plane of the Figure.

It appears clear from Figure 3 that a rotatable pump 8 comprising blades 8b is received inside the secondary body 3. Such a pump 8a is adapted to be fed with the paste exiting or discharged from the hopper 2 and to emit the paste through the outlet tube 3a on which a tubular casing 7 has been fitted like a sock. The pump 8a is actuated by actuating means 8, for instance, by an oil-pressure motor. Alternatively, an electrical motor or any other means adapted to this end can be provided along those well known to the skilled persons. Vacuum means (not depicted in Figure 3) are also usually provided for the purpose of removing air from the pump 8a.

As anticipated above, further driving or actuating means 9 are received inside the housing or receiving body 6. The purpose of said additional actuating means is that of actuating advancing means 13 received inside the hollow body 14. Said hollow body 14 and said advancing means 13 belong to discharging means 10 received inside the main body 2a of the hopper 2. The actuating means 9 are connected to rotatable means 12 by means of a driving belt 11. In turn, the rotatable means 12 are adapted to be engaged with said advancing means 13. It appears clear that in the same way as in the case of the actuating means 8, several actuating means along those known to the skilled person can be provided for the purpose of rotatable the rotatable means 13. For instance, either an oil-pressure motor or an electrical motor may be provided to this end. Moreover, driving means other than the driving belt 11 may be provided. For instance, driving means comprising gears adapted to be engaged with the motor 9 and the rotatable means 12, respectively, may be provided.

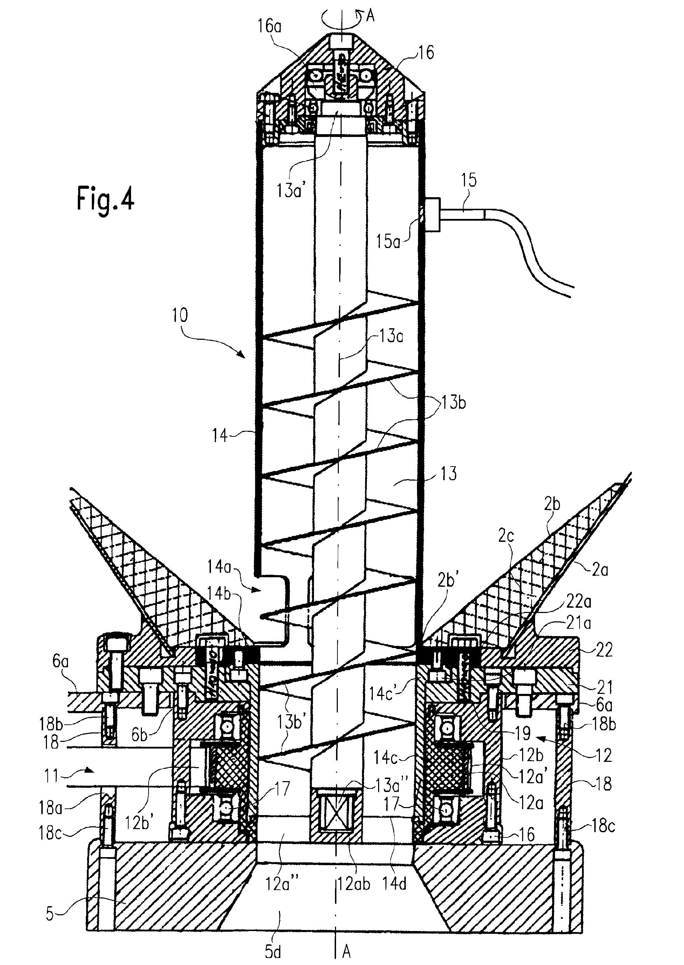

In the following some additional details of a preferred embodiment of the hopper according to the present invention will be described with reference to Figure 4. In Figure 4, those parts already described with reference to Figures 2 and 3 are identified by the same reference numerals. It appears clear from Figure 4, that the advancing means 13 comprising essentially an endless screw are received inside a hollow body 14 having a substantially cylindrical shape. Said hollow body 14 comprises at least at inlet aperture 14a for allowing the past previously loaded into the main body 2a to enter into the hollow body 14. Moreover, sliding or guiding means 2b are also provided inside the main body 2a for the purpose of assisting the past to enter into the hollow body 14 through the aperture 14a. Said sliding or guiding means have the typical shape of a reversed truncated cone or, in other words, the shape of a funnel and comprise an aperture 2b' having a shape adapted to allow the sliding means 2b to be engaged with the external surface of the hollow body 14. Accordingly, in the case depicted in Figure 4, namely in the case that the hollow body 14 has a cylindrical shape the aperture 2b' is an aperture substantially circular. Filling means 2c are further provided between the sliding or leading means 2b and the main body 2a for the purpose of filling the space between the sliding or leading means 2b and the main body 2a. In this way, it is avoided that portions of paste may get trapped in the space between the sliding or leading means and the main body. Said filling means may comprise several materials such as for example, resin, rubber material or the like. Moreover, the sliding or leading means 2b are placed on a flange 14b extending from the external surface of the hollow body 14, so that the aperture 2b' of the sliding or leading means 2b may be opportunely positioned in correspondence or in proximity to the through aperture 14a. In this way, the discharge of the paste from the main body 2a of the hopper 2 is assisted or rendered easy. In the same way, the paste is assisted when entering into the hollow body 14 through the apertures 14a, thus avoiding that portions of paste may accumulate in front of the apertures 14a so as to obstruct the apertures 14a. This solution allows, moreover, to define a discharging direction of the hopper 2, substantially from the top to the bottom in Figure 4, namely substantially corresponding to the symmetry axis A-A of the main body 2a. This symmetry axis will be in the following also referred to as discharging axis.

Means 15 are also provided for removing the air from the inside of the hollow body 14 through an aperture 15a adapted to this end. For instance, a vacuum pump (not depicted in the Figure) may be provided to this end, as well as any other equivalent means adapted to this end along those known to the skilled persons.

The endless or metering 13 is kept in its right position inside the hollow body 14 by means of positioning or supporting means 16 adapted to this end and provided in the upper portion of the hollow body (the top portion in Figure 4). In particular, said positioning or supporting means comprise bearings 16a adapted to be engaged with the end upper portion 13a' of the rotatable shaft 13a of the auger or metering screw 13. Said bearings 16a are provided with the purpose of allowing the endless screw 13 to be rotated, avoiding at the same time the active turns or spirals 13b of the screw may coming into contact with the hollow body 14 during rotation thus causing the endless scsrew to rub or scrape along the internal surface of the hollow body.

The hollow body 14 comprises an end portion 14c (on the bottom in Figure 4). As it will become apparent from the following description, said end portion 14c is placed downstream in the advancing direction of the paste within the hollow body 14 namely, the direction in which the paste is advanced by means of the endless or metering screw 13. The bottom spirals or active turns 13b' of the screw or auger 13 are received within said downstream end portion 14c together with the lower end portion 13a" of the shaft or rod 13a. The expression lower end portion is used to identify the end portion on the bottom in Figure 4 of the shaft or rod 13a and of the spirals or active turns 13b. It appears moreover clear from Figure 4 that the lower end portion 14c of the hollow body 14 comprises a flange 14c' adapted to be fixed to the flange 14b of the hollow body 14 by means of fixing means adapted to this end, such as for instance, screws or the like.

It appears moreover, from Figure 4 that the lower end portion 14c of the hollow body 14 comprises an emission or outlet aperture 14d provided in correspondence with a through aperture 5d of the base 5 on which the hopper is placed. It will therefore be apparent to those skilled in the art that the paste entering the hollow body 14 through the apertures 14a is pushed toward the bottom by the spirals 13b of the endless or metering screw 13 so as to be advanced by the screw from the apertures 14a till to reach the outlet or exiting aperture 14d. In other words, the paste is advanced in the advancing direction indicated by the arrow in Figure 4. Once the paste has reached the aperture 14d, the paste is further discharged from the hopper through the aperture 5d of the base 5 into the secondary body 3 (not depicted in Figure 4). The advancing direction runs substantially parallel with the discharging axis described above of the main body 2a.

In the following, the operation of the screw 13 will be described together with those component parts by means of which the endless or metering screw 13 is actuated or rotated.

As anticipated above, the screw 13 is rotated by means of rotatable means 12 which are in turn rotated by a driving belt 11 connected to driving means, for instance, to a motor (see Figure 3). Said rotatable means 12 comprise in particular, a rotatable portion 12a adapted to be engaged by the driving belt 11. To this end, the rotatable portion comprises engaging means, such as, for example, teeth or protuberances 12a'. The rotatable portion 12a is received within a fixed portion 12b comprising apertures 12b' for allowing the driving belt 11 to engage the rotatable portion 12a. The fixed portion 12b of the rotatable means 12 is fixed to the base 5 by means of fixing means 16 adapted to this end, such as, for example, screws or the like.

Bearings 17 are also provided between the rotated portion 12a and the fixed portion 12b for allowing the rotatable portion to be rotatable with respect to the fixed portion. A portion 12a" firmly fixed to the rotatable portion 12a extends diametrically from the internal surface of the rotatable portion, namely, from the surface of the rotatable portion facing the screw 13. The portion 12a" is provided in a position immediately under the aperture 14d of the hollow body 14. Said portion 12a" has the shape of a spoke or bar so that the aperture 14d is not completely obstructed by said portion 12a". Moreover, the portion 12a" comprises a seat 12ab adapted to receive the end portion 13a" of the shaft or rod 13a so that the end portion 13a" of the shaft or rod 13a may be engaged with the portion 12a". It will therefore be apparent that when the rotatable portion 12a of the rotatable means 12 is rotated by means of the driving means 9 and the driving belt 11, the portion 12a" is rotated together with the rotatable portion 12a so that the screw 13 is also rotated since its shaft or rod 13a is received within the seat or housing 12ab. Accordingly, the rotation of the screw or auger 13 results in the paste to be advanced from the inlet aperture 14a till to reach the outlet aperture 14d so as to be discharged from the hopper 2.

It appears also clear from Figure 4 that the rotatable means 12 are received within a seat or housing 6b of the supporting means 6a. Said supporting means 6a are fixed to a ring 18, for instance, by means of screws 18b as depicted in Figure 4. Said ring 18 comprises an aperture 18a for receiving the transmission belt 11. In turn, the ring 18 is fixed to the base 5, for instance, by means of screws 18c or the like as depicted in Figure 4.

It has also to be noted that the fixed portion 12b of the rotatable means 12 comprises a receiving seat 19 adapted to receive a ring shaped protrusion 20 extending from a flange 21 provided on the supporting means 6a and the rotatable means 12. This flange 21 is provided for the purpose of reinforcing the overall structure of the hopper as well as for the purpose of exactly positioning the rotatable means inside the hopper.

Moreover, the flange 21 comprises a receiving seat 21a having an angular shape and adapted to receive the flange 14c' extending from the end portion 14c of the hollow body 14. In this way, it is obtained that the several component parts are rightly positioned, thus avoiding that said component parts can move or get misaligned so as to disturb the operations. Finally, a flange 22 is also provided for the purpose of correctly positioning the main body 2a of the hopper 2. Said flange 22 comprises a circular aperture 22a wherein the flange 14b of the hollow body 14 is engaged.

In the following, the reciprocal disposition inside the hopper of some component parts already described with reference to Figures 2 to 4 will be further clarified.

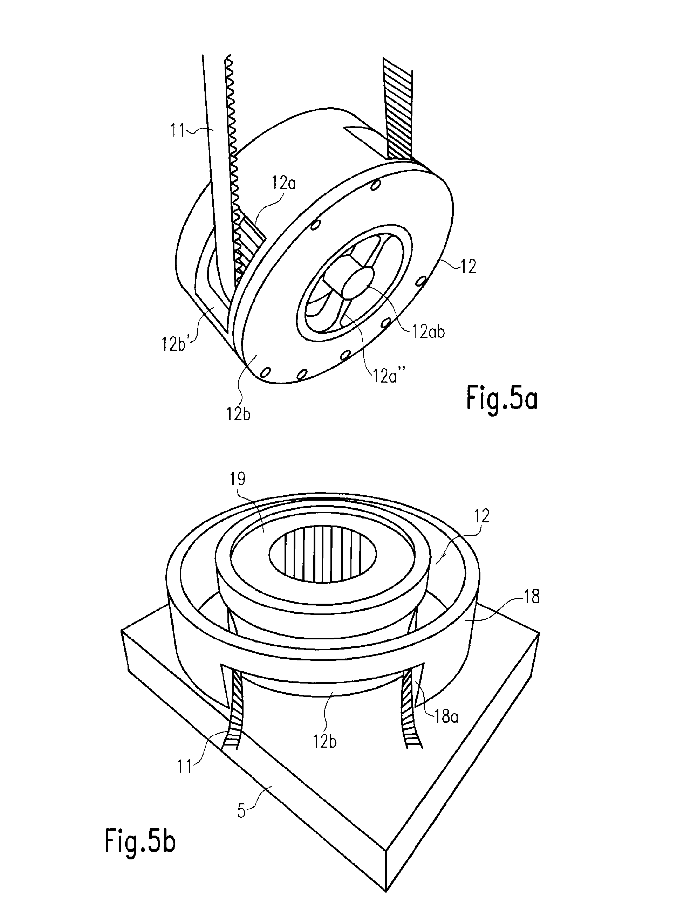

It appears for instance clear from the enlarged view of Figure 5a, that the rotatable means 12 comprise an external fixed portion 12b and a rotatable portion 12a received within said external portion 12b. Moreover, in Figure 5a there are also depicted the apertures 12b' for receiving the driving belt 11 so as to allow the driving belt to engage the rotatable portion 12a. Depicted in Figure 5a are also the spoke or bar 12a" firmly fixed to the rotatable portion 12a together with the seat 12ab for receiving the end portion 13a" of the shaft 13a of the auger or endless screw 13.

It appears also clear from Figure 5b that the rotatable means 12 are placed on the base 5 in such a way to be received within the ring 18 also fixed to the base 5. It is also apparent from Figure 5b that the aperture 18a is provided in the ring 18 for receiving the driving belt 11. Moreover, in Figure 5b there is depicted the seat 19 of the rotatable means 12 provided for receiving the protrusion 20 of the flange 21.

With reference now to Figure 5c it can be understood that the supporting means 6a are placed over the ring 18 so as to receive the rotatable means 12 in the aperture 6b. In particular, it appears clear from Figure 5c that the supporting means 6a comprise a flange shaped portion and a fork shaped portion extending from said flange, with the driving means 9 being placed on said fork shaped portion together with the cover 6 wherein the driving means are received. As depicted in Figure 5c, the flange 22 is disposed on the flange shaped portion of the supporting means 6a, with said flange 22 comprising a receiving seat or aperture 22a, wherein there is received the flange 14c' of the end portion 14c of the hollow body 14.

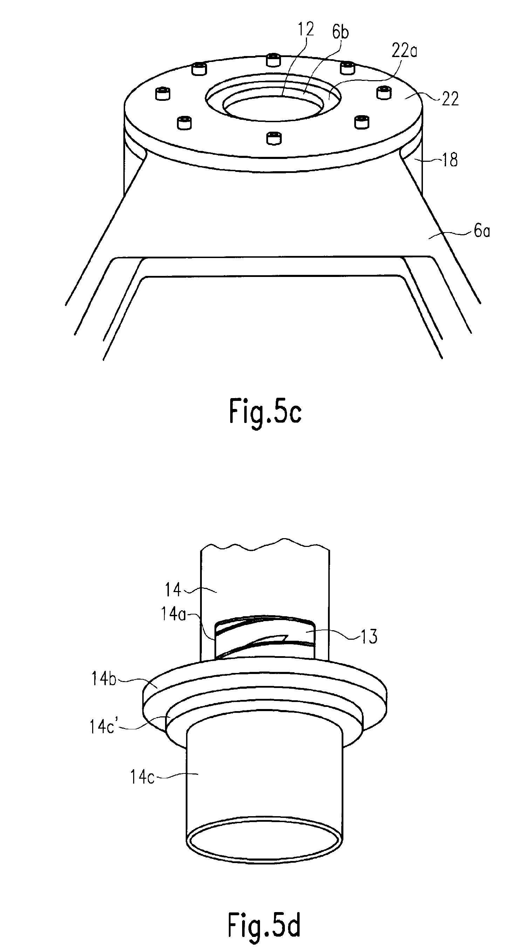

Finally, in Figure 5d there are depicted in an enlarged view the hollow body 14 and its end portion 14c, with said hollow body 14 and its portion 14c being fixed together in correspondence to the flanges 14b and 14c', respectively. Within the hollow body 14 there is received the auger or screw 13. Moreover, the hollow body 14 comprises at least one through aperture 14a for allowing the paste inside the main body 2a to enter into the hollow body. As anticipated above, the flange 14c' is received within the seat 22a of the flange 22.

It has been therefore verified that the hopper and the stuffing machine according to the present invention allow to overcome the drawbacks affecting the prior art machines so as to obtain the goals and scopes posed. In fact, the hopper according to the present invention, due to the fact that the discharging means are disposed inside the funnel shaped main body, with said discharging means comprising essentially the hollow body and the auger or endless screw, allows to reduce the overall dimension of the hopper, thus allowing the hopper according to the present invention to be used in combination with a small stuffing machine. This is particularly appreciated when the stuffing machines are to be used in working rooms with reduced dimensions.

Moreover, the fact that the discharging means are positioned inside the funnel shaped body allows the hopper to be adequately and quickly discharged or emptied, thus avoiding that portions of paste remain trapped in the funnel or adhere to the wall of the funnel. Moreover, a more adequate remotion of the air from the discharging means is obtained, thus avoiding the paste being exposed to the air for a long period of time causing the paste to develop a disagreeable white-like color. It is also avoided that air is trapped within the stuffed products which could lead to the formation of air pockets or voids in the stuffed products.

Finally, it has also been verified that the hopper according to the present invention, when used in combination with a stuffing machine equipped with a rotatable pump, allows the rotatable pump to be more efficiency fed.

It has to be noted that a wide range of changes and modifications can be made to the embodiments described above without leaving the scope of the present invention. For instance, a hollow space or an interspace may be provided between the screw and the hollow body for the purpose of recovering or collecting back the paste, in those situations in which the rotatable pump is over fed by the auger. Alternatively, to this end grooves or channels may be provided on the internal surface or the hollow body or a conduit or tube may be provided outside the hollow body. It has therefore to be understood that are all the claims, including all equivalencies, that are intended to define the scope of the present invention.

## Claims

1. A feeding hopper (2) of the kind used for feeding stuffing machine with soft pasties, comprising a main body (2a) with a discharging axis and adapted to be loaded with said soft pasties, and discharging means (10) for discharging said soft pasties from said main body, wherein said discharging means have an advancing direction, said feeding hopper being
**characterized in that**
said discharging means are disposed inside said main body (2a) is such a way that said advancing direction runs substantially parallel to said discharging axis, said discharging means comprising a hollow body (14) with at least are inlet aperture (14a) for receiving said soft pasties and at least one outlet aperture 14d for exiting said soft pasties, and advancing means (13) inside said hollow body (14) for advancing said soft pasties from said at least one inlet aperture (14a) to said outlet aperture (14b).

2. A hopper according to claim 1,
**characterized in that**
said advancing means are actuated by rotatable means (12) adequately connected to driving means (9).

3. A hopper according to claim 2,
**characterized in that**
said driving means (9) comprises a motor connected to said rotatable means (12) by means of a driving belt (11).

4. A hopper according to one of claims 2 to 3,
**characterized in that**
said rotatable means (12) comprise a fixed portion (12b) and a rotatable portion (12a) adapted to be engaged with said advancing means (13).

5. A hopper according to one of claims 1 to 4,
**characterized in that**
said discharging means comprise a hollow body (14) having a substantially cylindrical shape and **in that** said discharging means (13) comprises a rotatable endless screw.

6. A hopper according to claim 5,
**characterized in that**
said screw comprises a main shaft (13a) comprising an end portion (13a") adapted to be engaged with said rotatable means.

7. A hopper according to one of claims 1 to 6,
**characterized in that**
said hopper comprises sliding or leading means to be placed inside said main body (2a) and adapted to convoy said soft pasties toward at least one of said inlet apertures (14a) of said hollow body (14).

8. A hopper according to one of claims 1 to 7,
**characterized in that**
said hopper comprises vacuum means for removing air from said hollow body (14).

9. A stuffing machine for soft pasties,
**characterized in that**
said stuffing machine is equipped with a hopper according to one of claims 1 to 8.

10. A stuffing machine according to claim 9,
**characterized in that**
said stuffing machine comprises a rotatable pump (8a) with blades (8b) adapted to be fed by said hopper, with said pump being connected with an exit tube (3a) for exiting said soft pasties.

11. A stuffing machine according to claim 10,
**characterized in that**
said pump (8a) comprising blades (8b) comprises an inlet aperture placed in correspondence to the outlet aperture of the hollow body of the hopper.
